# EUROPÄISCHE PATENTANMELDUNG

(11) **EP 1 731 344 A2**
(43) Veröffentlichungstag der Anmeldung: **13.12.2006**
(21) Anmeldenummer: 06011978.1
(22) Anmeldetag: 09.06.2006
(51) Int. Cl.: B60K 15/063

(54) **Tankbehältereinrichtung für ein Verbrennungsaggregat, insbesondere für einen Verbrennungsmotor eines Kraftfahrzeuges**

(30) Priorität: 09.06.2005 DE 102005026584
(71) Anmelder: Greten, Tom, 31848 Bad Münder (DE)
(72) Erfinder: Greten, Tom, 31848 Bad Münder (DE)
(74) Vertreter: Jabbusch, Matthias

(57) **Zusammenfassung**

Bei einer Tankbehältereinrichtung für ein Verbrennungsaggregat, insbesondere für einen Verbrennungsmotor eines Kraftfahrzeuges, mit zumindest einem Behälter (1) für eine brennbare Flüssigkeit, ist vorgesehen, daß sie in Baueinheit mit dem Behälter eine Umschalteinrichtung (2) aufweist, welche eingangsseitig mit dem Behälter und mit zumindest einem weiteren Behälter flüssigkeitsleitend verbunden ist und welche ausgangsseitig an ein zum Verbrennungsmotor führendes Flüssigkeitsleitungssystem angeschlossen ist.

## Beschreibung

Die Erfindung betrifft eine Tankbehältereinrichtung für ein Verbrennungsaggregat, insbesondere für einen Verbrennungsmotor eines Kraftfahrzeuges, mit zumindest einem Behälter für eine brennbare Flüssigkeit.

Verbrennungsaggregate und Verbrennungsmotoren werden zum Erzeugen einer Leistung mit brennbaren Flüssigkeiten versorgt. Die brennbaren Flüssigkeiten werden diesen Verbrennungsaggregaten über Leitungen zugeführt und anschließend über Einspritzdüsen oder andere Bauelemente in Verbrennungskammern eingebracht.

Zur Bevorratung der brennbaren Flüssigkeit in der Nähe des Verbrennungsaggregates werden regelmäßig Behälter eingesetzt, welche beispielsweise als Tankbehälter ausgebildet sind. Diese Tankbehälter finden beispielsweise Anwendung in Kraftfahrzeugen, indem die Tankbehälter im Bereich von Chassis der Kraftfahrzeuge angeordnet werden.

Für bestimmte Verbrennungsaggregate und auch für bestimmte Verbrennungsmotoren von Kraftfahrzeugen können alternative brennbare Flüssigkeiten eingesetzt werden. So ist bekannt, daß ein Dieselkraftfahrzeug in seinem Verbrennungsmotor Diesel verbrennen kann und auch Biodiesel verbrennen kann. Auch der Einsatz von Pflanzenöl als Alternative zu Dieselkraftstoff ist bereits bekannt.

Regelmäßig wird ein Verbrennungsaggregat hauptsächlich auf eine brennbare Flüssigkeit ausgelegt. Der Betrieb dieses Aggregates mit einer alternativen Flüssigkeit ist möglich, hat aber unter bestimmten Betriebsbedingungen Nachteile. Bei einem Dieselmotor ist es möglich, einen warmen und angelaufenen Dieselmotor mit Biodiesel oder mit Pflanzenöl ohne Schwierigkeiten zu betreiben. Das Starten eines Dieselmotors insbesondere mit Pflanzenöl ist dagegen erschwert, da diese brennbare Flüssigkeit im kalten Zustand eine höhere Viskosität als der mineralische Diesel aufweist. Es ist daher bereits vorgeschlagen worden, für ein derartiges Verbrennungsaggregat, beispielsweise für einen Dieselmotor in einem Kraftfahrzeug, zwei voneinander verschiedene brennbare Flüssigkeiten einzusetzen. Bei einem Dieselmotor kann ein Kaltstart mit mineralischem Dieselkraftstoff erfolgen und später ein Wechsel zu einem alternativen Kraftstoff, z.B. zu Pflanzenöl, erfolgen.

Fahrzeuge mit Dieselmotoren, die von den Bändern der Fahrzeughersteller laufen, sind regelmäßig mit nur einem Tankbehälter ausgerüstet. Für einen zweiten Kraftstoff wird daher im Stand der Technik in Bastellösungen ein weiterer Behälter am Fahrzeug befestigt. Um abwechselnd mineralischen Diesel und den alternativen Kraftstoff dem Verbrennungsmotor zuführen zu können, ist des weiteren eine Umschalteinrichtung erforderlich. Auch diese Umschalteinrichtung wird in verschiedener Form am Fahrzeug angeordnet.

Dieses Anordnen von weiteren Tankbehältern und einer Umschalteinrichtung erfüllt zumeist nicht die Qualitätsvorschriften der Hersteller der Kraftfahrzeuge. Zudem leidet durch derartige nicht serienmäßig vorgesehene Bauteile die Betriebssicherheit der Fahrzeuge.

Der Erfindung liegt die Aufgabe zugrunde, eine Tankbehältereinrichtung der vorgenannten Gattung aufzuzeigen, mit der in funktionsgerechter und betriebssicherer Weise ein Betrieb von Verbrennungsaggregaten mit voneinander verschiedenen brennbaren Flüssigkeiten ermöglicht ist.

Diese Aufgabe ist erfindungsgemäß durch eine Tankbehältereinrichtung gelöst, welche in Baueinheit mit dem Behälter eine Umschalteinrichtung aufweist, welche eingangsseitig mit dem Behälter und mit zumindest einem weiteren Behälter flüssigkeitsleitend verbunden ist und welche ausgangsseitig an ein zum Verbrennungsmotor führendes Flüssigkeitsleitungssystem angeschlossen ist.

Bei der erfindungsgemäßen Tankbehältereinrichtung ist es nicht mehr notwendig, einen zusätzlichen Tank und eine Umschalteinrichtung voneinander getrennt in der Umgebung eines Verbrennungsaggregates anzuordnen, beispielsweise am Chassis eines Fahrzeuges anzuordnen. Der Behälter ist mit der Umschalteinrichtung vielmehr zu einer Baueinheit zusammengeführt, welche an einem Ort des Chassis angeordnet werden kann. Innerhalb dieser Baueinheit ist der Behälter bereits an die Eingangsseite der Umschalteinrichtung angeschlossen, so daß eine Zuleitung zur Umschalteinrichtung sehr kurz ausgebildet ist und bereits vorhanden ist. An einen weiteren Anschluß kann die Zuleitung aus einem weiteren Behälter angeschlossen werden. Dies kann beispielsweise der bereits vorhandene ursprüngliche Behälter für Dieselkraftstoffe in einem Fahrzeug sein. Auf der Ausgangsseite ist die Umschalteinrichtung an das zum Verbrennungsmotor führende Flüssigkeitsleitungssystem angeschlossen, so daß über dieses Flüssigkeitsleitungssystem abwechselnd z.B. Dieselkraftstoff und Pflanzenöl dem Motor zugeführt werden.

Nach einer ersten Weiterbildung der Erfindung ist vorgesehen, daß in der Baueinheit zumindest zwei Behälter für vorzugsweise voneinander verschiedene Flüssigkeiten und eine eingangsseitig mit diesen Behältern verbundene Umschalteinrichtung aufgenommen sind. Nach dieser Weiterbildung ist die erfindungsgemäße Tankbehältereinrichtung nicht einem bereits vorhandenen Tank hinzuzufügen, sondern die erfindungsgemäße Tankbehältereinrichtung kann einen bisher vorhandenen Tank vollständig ersetzen. Aufgrund des Umstandes, daß zwei oder mehr Behälter für Flüssigkeiten vorhanden sind, kann einer der Behälter für die bisher verwendete Flüssigkeit eingesetzt werden, während in den anderen Behälter eine Alternativflüssigkeit einfüllbar ist. Die Umschalteinrichtung ist mit beiden Behältern flüssigkeitsleitend verbunden, so daß aus beiden Behältern Flüssigkeiten entnommen werden können und über die Umschalteinrichtung in ein Flüssigkeitsleitungssystem eingeführt werden können.

Der wenigstens eine Behälter und die Umschalteinrichtung bilden vorzugsweise eine kompakte Baueinheit aus. Aufgrund dieser Kompaktheit kann diese eine Baueinheit in einfacher Weise z.B. an einem Fahrzeug angeordnet werden.

Nach einer nächsten Weiterbildung der Erfindung ist vorgesehen, daß die Abmessungen der Baueinheit den Abmessungen eines konventionellen Tankbehälters entsprechen. Aufgrund dieser übereinstimmenden Abmessungen ist es vorteilhaft ermöglicht, daß die Baueinheit an der gleichen Stelle wie ein konventioneller Tankbehälter angeordnet werden kann. Der konventionelle Tankbehälter kann abgenommen werden und durch die erfindungsgemäße Baueinheit aus einem oder mehreren Tankbehältern und der Umschalteinrichtung ersetzt werden. Die Nachrüstung einer z.B. Zweibehältereinheit gegenüber einer vorher vorhandenen Einbehältereinheit ist somit sehr vereinfacht. Häufig können die gleichen Befestigungspunkte bzw. -elemente eingesetzt werden. Durch entsprechende Konfiguration der Baueinheit ist es zudem ermöglicht, daß die Baueinheit an die gleichen Anschlüsse eines Flüssigkeitsleitungssystems anschließbar ist. Das Verlegen zusätzlicher Flüssigkeitsleitungen und das Ausbilden neuer Anschlüsse ist damit vorteilhaft nicht erforderlich.

Der erfindungsgemäßen Tankbehältereinrichtung ist vorzugsweise eine Temperiereinrichtung zugeordnet. Diese Temperiereinrichtung kann beispielsweise dazu dienen, in einem Behälter aufgenommenes Pflanzenöl bzw. Biodiesel zu erwärmen. Die Tankbehältereinrichtung kann dabei mit einer eigenen Temperiermittelförderung ausgerüstet sein. Eine Temperierflüssigkeit für die Tankbehältereinrichtung kann beispielsweise über einen vorhandenen Luft-/Kraftstoffkühler geführt werden, insbesondere dann, wenn dieser nicht mehr in Verbindung mit einem Kraftstoffsystem steht. Die Tankbehältereinrichtung ist dadurch mit einem temperierten Mittel versorgbar. Durch diese Temperierung der Tankbehältereinrichtung wird sichergestellt, daß die Temperatur des von der Tankbehältereinrichtung zur Verfügung gestellten Kraftstoffes nicht über einen vom Hersteller angegebenen Wert ansteigt, jedoch auf diesen Wert erhöht wird, also optimal eingestellt wird. Auch ein Niedertemperatur-Wasserkreislauf einer Ladeluftkühlung kann gegebenenfalls mit heißem Kühlwasser vom Motor gemischt werden, um die gewünschte Temperatur einzuhalten. Mischventile werden für diesen Mischvorgang verwendet, diese können selbstregelnd über Dehnstoffelemente sein.

Vorzugsweise ist vorgesehen, daß die Temperiereinrichtung mit der Temperiereinrichtung der Verbrennungsmaschine verknüpft ist. Dadurch kann für die Temperierung der Tankbehältereinrichtung die regelmäßig bereits vorhandene bzw. ohnehin vorzusehende Temperiereinrichtung der Verbrennungsmaschine benutzt werden. So kann ein Kühlmittelrückfluß der Verbrennungsmaschine über die Tankbehältereinrichtung geführt werden, um eine weitere energetische Nutzung der zurückfließenden Kühlmittelflüssigkeit zu erreichen. Die Temperiereinrichtung kann zudem eine Zusatzheizung enthalten, welche bei einem Stillstand der Verbrennungsmaschine eingesetzt werden kann.

Die Temperatur, mit der ein Kraftstoff außerhalb von Zylinderkopf, Injektor, Einspritzdüse oder Verdampferfläche temperiert wird, ist lediglich für die einwandfreie Funktion der jeweiligen Einspritzanlage erheblich. Frühere Systeme konnten problemlos gänzlich mit Kraftstofftemperaturen betrieben werden, die auf dem Niveau der Kühlmitteltemperatur oder darüber liegen. Dies sind im Regelbetrieb ca. 90-105°C.

Die moderne Einspritztechnik allerdings ist für dieses Vorgehen nicht mehr geeignet.

Mit Kraftstoff gekühlte Steuergeräte können Schaden nehmen oder durch Kraftstoff gekühlte und geschmierte Hochdruckpumpen können Schaden nehmen oder überhitzen.

In jedem Fall fällt ein solches System plötzlich aus und stellt somit eine Gefahr für Betreiber und Öffentlichkeit dar.

Im Stand der Technik werden möglichst hohe Kraftstofftemperaturen in der Vorwärmung allerdings als Notwendigkeit für die beste Verbrennung des Kraftstoffs im Brennraum beschrieben.

Dieser Sachverhalt wird durch die zu erfindungsgemäße Temperaturregelung der Kraftstofftemperatur auf die jeweilige optimale Arbeitstemperatur der Einspritzanlage aufgebrochen.

Es ist nahezu unerheblich, mit welcher Temperatur Kraftstoff zum Brennraum gefördert wird.

In letzter Station wird Kraftstoff durch brennraumnahes Material geführt (Zylinderkopf, Injektor, Einspritzdüse, Verdampferfläche) und nimmt damit die zur dieselähnlichen Zerstäubung notwendige Temperatur auf.

Diesen Sachverhalt macht sich die Vorrichtung zu Nutze, weshalb der in der Einspritzanlage zirkulierende Kraftstoff lediglich auf Temperaturen von ca. 55°C bis 80°C temperiert wird. Die jeweiligen optimalen Arbeitstemperaturen der unterschiedlichen Systeme müssen dabei genauestens eingehalten werden.

Um dies zu gewährleisten, ist es nicht ausreichend, den Stand der Technik zum Einsatz zu bringen, denn es ist nur die geregelte Zufuhr von Wärme vorgesehen in Verbindung mit der natürlichen Abkühlung bei Unterbrechung der Wärmezufuhr.

Gegenstand der technischen Neuheit ist also nicht die gezielte und geregelte Aufwärmung von Kraftstoff durch einfaches Ein- und Ausschalten von Wärmequellen, sondern die kontinuierliche, geregelte und gezielte Temperierung von Kraftstoff, um die notwendigen Systemtemperaturen unter allen Betriebsbedingungen einzuhalten und um die von modernen Einspritzsystemen entwickelte Abwärme abzutransportieren.

Um die Betriebssicherheit der Anlagen zu gewährleisten, kann die Kühlung von Kraftstoff nicht unmittelbar durch die Benutzung von Luft/Kraftstoff Kühlern erfolgen, da solche Technik bei Außentemperaturen unter dem Stockpunkt des jeweiligen Kraftstoffes die Gefahr der Kühlerverstopfung auf der Kraftstoffseite birgt. Palmöl beispielsweise weist einen Stockpunkt von ca. 20°C auf und würde so einen Betrieb einer solchen Vorrichtung bei beispielsweise -5°C Außentemperatur verhindern können durch Einnehmen des festen Aggregatzustandes.

Aus diesem Grund wird in der zu patentierenden Anlage ein Wärmeübertrager mit einem auf die gewünschte Kraftstofftemperatur temperiertem Wärmeträger wie beschrieben versorgt. Es handelt sich dabei beispielsweise um Kühlmittel des Verbrennungsmotors, welches von ca. 90-105°C auf die Zieltemperatur des Kraftstoffes gekühlt wird. Kraftstoff, der diese Vorrichtung durchfließt kann dann in der Vorrichtung je nach Notwendigkeit Wärme abgeben oder aufnehmen.

Die Kühlmitteltemperierung kann dabei durch ein Mischventil erfolgen, dessen Thermostat entweder unmittelbar dem Kühlmittel ausgesetzt ist oder durch ein Thermostat welches unmittelbar im Kraftstoffstrom liegt, aber durch eine hydraulische Trennung unmittelbar den Kühlmittelstrom regelt. Eine elektronische Temperaturmessung i.V. mit einer Regelung des Kühlwasserstromes durch Magnetventile oder Proportionalventile kann ersatzweise erfolgen.

Zur weiteren Ausbildung der Erfindung ist vorgesehen, daß jeder Behälter ein Kraftstoffbehälter ist und daß in diesem Kraftstoffbehälter zumindest ein Kraftstoffsensor angeordnet ist. In den Behältern der Tankbehältereinrichtung kann beispielsweise Diesel und Pflanzenöl aufgenommen sein. Andere Kraftstoffe können Pflanzenfette oder Benzine sein. In jedem Behälter ist vorzugsweise ein Kraftstoffsensor angeordnet, der die Art des Kraftstoffes überwacht und gegebenenfalls auch den Füllstand des Kraftstoffes überwacht. Wird in einem Behälter ein falscher Kraftstoff eingefüllt, so kann eine Sperrung der Umschalteinrichtung erfolgen. Die Erkennung des Füllstandes des Kraftstoffes im Behälter kann auf entsprechende Anzeigeinstrumente übermittelt werden. Ein entsprechendes Anzeigeelement kann dabei die Füllstände in sämtlichen Behältern anzeigen oder jeweils den Füllstand in dem Behälter anzeigen, aus dem gerade Flüssigkeit entnommen wird und der Umschalteinrichtung zugeführt wird.

Für den Betrieb von Dieselmotoren mit pflanzlichen Ölen oder Fetten ist es von besonderer Wichtigkeit, möglichst schnell vom Startkraftstoff Diesel auf den Regelkraftstoff umschalten zu können.

Wenn Kraftstoffe zum Einsatz kommen, die bei den jeweiligen Außentemperaturen in den festen Aggregatzustand übergehen, ist es also besonders wichtig, alle Bauteile, die mit diesem Kraftstoff arbeiten, so schnell wie möglich über die Erstarrungstemperatur des jeweiligen Kraftstoffes anzuheben.

Dies kann auf ideale Weise nur mit der beschriebenen Tanklösung geschehen, wobei die gesamte Anlage so gestaltet ist, daß sowohl der Tankinhalt als auch jede Flüssigkeitsleitung temperiert werden. Dies ist auf einfachste Weise möglich, wenn die Position vom Umschalter Startkraftstoff/Regelkraftstoff möglichst nahe dem Regelkraftstoff Behälter zugeordnet ist. So ist die verbindende Leitung mit minimaler Länge oder nicht vorhanden, es entfällt der Engpass der Verbindungsleitung nahezu und besonders bei hohen Entnahmemengen entfällt die Notwendigkeit von zusätzlichen Pumpen oder Wärmetauschern zum Ausgleich der Strömungswiderstände in dieser Strecke. Der oben genannte Wärmeübertrager für die Kraftstofftemperierung ist dabei unmittelbar nach dem Umschaltventil im Vorlauf zur Kraftstoffanlage angeordnet, der Tankinhalt ist bereits temperiert.

Ein Ausführungsbeispiel, aus dem sich weitere erfinderische Merkmale ergeben, ist in der Zeichnung dargestellt. Es zeigen:
Fig. 1: eine schematische Ansicht eines ersten Ausführungsbeispiels einer erfindungsgemäßen Tankbehältereinrichtung,
Fig. 2: eine schematisch Ansicht eines zweiten Ausführungsbeispiels einer erfindungsgemäßen Tankbehältereinrichtung, und
Fig.3: eine schematische Teilseitenansicht eines Lastkraftwagens mit einer Tankbehältereinrichtung nach Fig. 2.

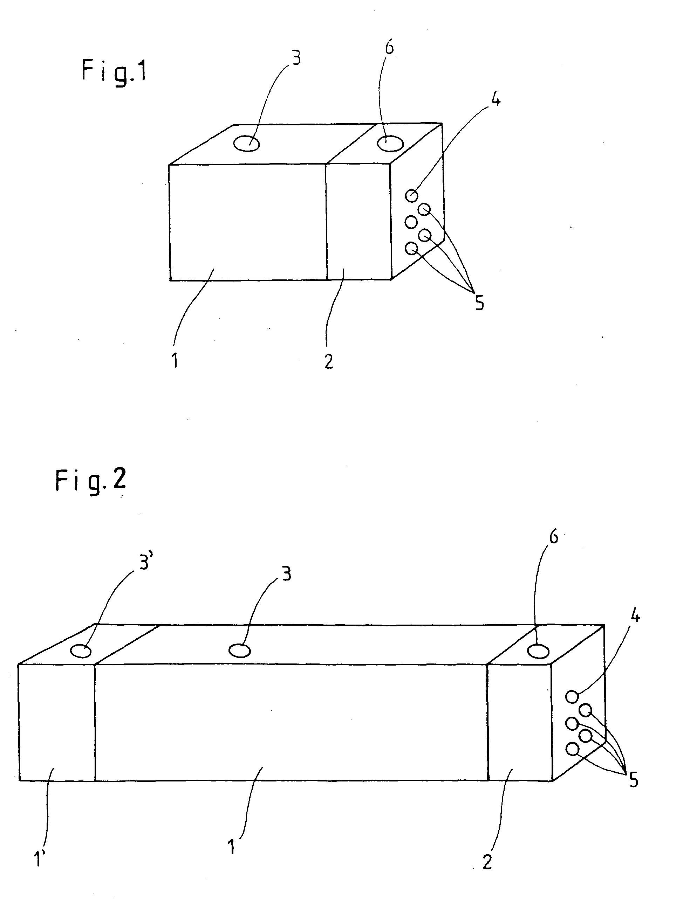

Die Tankbehältereinrichtung in Fig. 1 ist als quaderförmige Baueinheit dargestellt. Diese Baueinheit weist einen Behälter 1 und eine Umschalteinrichtung 2 auf. Behälter 1 und Umschalteinrichtung 2 sind zu der Baueinheit kompakt zusammengesetzt.

Der Behälter 1 weist eine verschließbare Einfüllöffnung 3 auf. In den Behälter 1 eingeführte Flüssigkeit wird über eine Flüssigkeitsleitung in die Umschalteinrichtung 2 geführt. Die Flüssigkeitsleitung zwischen Behälter 1 und Umschalteinrichtung 2 kann sehr kurz ausgebildet sein, sie ist in Fig. 1 nicht weiter dargestellt.

Mit der Umschalteinrichtung 2 ist wenigstens ein weiterer, in Fig. 1 nicht dargestellter Behälter flüssigkeitsleitend verbunden. Dargestellt ist der Anschluß 4 für diesen Behälter. Mit der Umschalteinrichtung 2 kann eingestellt werden, ob aus dem Behälter 1 oder dem nicht dargestellten Behälter Flüssigkeit entnommen wird und über eine nicht weiter dargestellte Flüssigkeitsleitung einem Verbrennungsaggregat zugeführt wird.

Im Bereich der Umschalteinrichtung 2 sind weitere Anschlüsse 5 für eine Motorkühlung, für Steuerungen und Anzeigegeräten vorhanden.

Im Ausführungsbeispiel nach Fig. 2 weist die Behältereinrichtung zwei Behälter 1, 1' auf. Beide Behälter 1,1' haben wieder Einfüllöffnungen 3, 3' und sind flüssigkeitsleitend mit der Umschalteinrichtung 2 verbunden. Auch bei dieser Umschalteinrichtung 2 kann ein Anschluß 4 für einen weiteren und somit dritten Behälter vorgesehen sein.

Bei den Ausführungsbeispielen in Fig. 1 und 2 ist auf der Oberseite der Umschalteinrichtung ein Anschluß 6 für eine Ableitung aus der Umschalteinrichtung 2 vorgesehen. Die nicht weiter dargestellte Ableitung kann zu einem Motor eines Kraftfahrzeuges führen. Bei 6 kann sich auch ein Anschluß für eine nicht weiter dargestellte Sensorik für eine Füllstandsanzeige befinden.

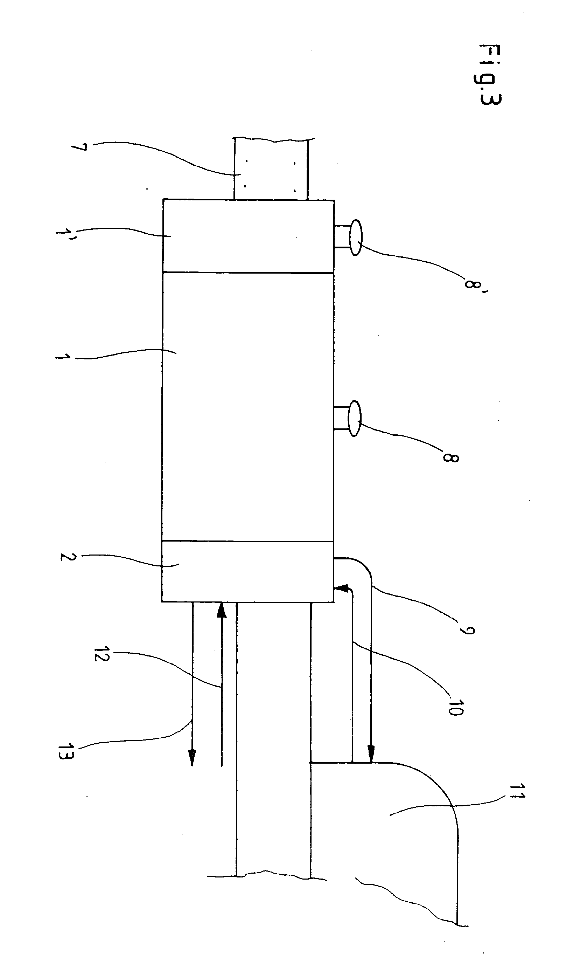

Die Behältereinrichtung nach dem zweiten Ausführungsbeispiel ist in Fig. 3 an das Chassis 7 eines Lastkraftwagens angesetzt. Die Einfüllöffnungen 3, 3' der Tankbehälter 1,1' sind durch übliche Verschlüsse 8, 8' verschlossen. Die Umschalteinrichtung 2 ist über eine Kraftstoffvorlaufleitung 9 und eine Kraftstoffrückleitung 10 mit einem gleichfalls am Chassis 7 befestigten Verbrennungsmotor 11 verbunden. Eine weitere Verbindung zwischen Umschalteinrichtung 2 und Motor 11 ist über Kühlmittelleitungen ausgebildet, da zwischen diesen beiden Bauteilen eine Kühlmittelvorlaufleitung 12 und eine Kühlmittelrücklaufleitung 13 verlaufen.

## Patentansprüche

1. Tankbehältereinrichtung für ein Verbrennungsaggregat, insbesondere für einen Verbrennungsmotor eines Kraftfahrzeuges, mit zumindest einem Behälter für eine brennbare Flüssigkeit,
**dadurch gekennzeichnet,**
**daß** sie in Baueinheit mit dem Behälter (1) eine Umschalteinrichtung (2) aufweist, welche eingangsseitig mit dem Behälter (1) und mit zumindest einem weiteren Behälter flüssigkeitsleitend verbunden ist und welche ausgangsseitig an ein zum Verbrennungsmotor führendes Flüssigkeitsleitungssystem angeschlossen ist.

2. Tankbehältereinrichtung nach Anspruch 1, **dadurch gekennzeichnet, daß** in der Baueinheit zumindest zwei Behälter (1) für vorzugsweise voneinander verschiedene Flüssigkeiten und eine eingangsseitig mit diesen Behältern verbundene Umschalteinrichtung (2) aufgenommen sind.

3. Tankbehältereinrichtung nach Anspruch 1, **dadurch gekennzeichnet, daß** der wenigstens eine Behälter (1) und die Umschalteinrichtung (2) eine kompakte Baueinheit ausbilden.

4. Tankbehältereinrichtung nach Anspruch 3, **dadurch gekennzeichnet, daß** die Abmessungen der Baueinheit den Abmessungen eines konventionellen Tankbehälters entsprechen.

5. Tankbehältereinrichtung nach einem der vorhergehenden Ansprüche, **dadurch gekennzeichnet, daß** dieser eine Temperiereinrichtung zugeordnet ist.

6. Tankbehältereinrichtung nach Anspruch 5, **dadurch gekennzeichnet, daß** die Temperiereinrichtung mit der Temperiereinrichtung der Verbrennungsmaschine verknüpft ist.

7. Tankbehältereinrichtung nach ei- nem der vorhergehenden Ansprüche, **dadurch gekennzeichnet, daß** jeder Behälter (1) ein Kraftstoffbehälter ist und daß in diesem Kraftstoffbehälter zumindest ein Kraftstoffsensor angeordnet ist.
